# EUROPÄISCHE PATENTSCHRIFT

(11) **EP 3 698 070 B1**
(45) Veröffentlichungstag und Bekanntmachung des Hinweises auf die Patenterteilung: **30.03.2022**
(21) Anmeldenummer: 18769955.8
(22) Anmeldetag: 06.09.2018
(51) Int. Cl.: F16H 63/34

(54) **PARKSPERRE FÜR EIN AUTOMATGETRIEBE IN EINEM KRAFTFAHRZEUG**
PARK LOCK FOR AN AUTOMATIC TRANSMISSION IN A MOTOR VEHICLE
FREIN DE STATIONNEMENT POUR TRANSMISSION AUTOMATIQUE DANS UN VÉHICULE AUTOMOBILE

(30) Priorität: 19.10.2017 DE 102017218748
(43) Veröffentlichungstag der Anmeldung: 26.08.2020
(73) Patentinhaber: ZF Friedrichshafen AG, 88046 Friedrichshafen (DE)
(72) Erfinder: KLEIN, Julia, 88048 Friedrichshafen (DE)
(74) Vertreter: ZF Friedrichshafen AG
(86) Internationale Anmeldenummer: PCT/EP2018/073951
(87) Internationale Veröffentlichungsnummer: WO 2019/076531

(56) Entgegenhaltungen:
- DE-A1-102006 012 343
- DE-A1-102006 012 343
- DE-A1-102009 028 340
- DE-A1-102009 028 340
- DE-T5-112014 002 064
- DE-T5-112014 002 064

## Beschreibung

Die vorliegende Erfindung bezieht sich auf eine Parksperre für ein Automatgetriebe in einem Kraftfahrzeug, gemäß dem Oberbegriff des Patentanspruchs 1.

Eine Parksperre eines Automatgetriebes ist bekanntlich eine Vorrrichtung, welches das Kraftfahrzeug, in dem das Automatgetriebe eingebaut ist gegen Wegrollen sichern kann. Derartige Parksperrenmechanismen sind aus dem Stand der Technik vielfältig bekannt. Sie umfassen üblicherweise eine auf einem Klinkenbolzen schwenkbar gelagerte Sperrklinke, die in ein mit dem Abtrieb des Getriebes verbundenes Parksperrenrad ein- oder ausrastet und ein auf einer Verbindungsstange zu einer auf einem Bolzen gelagerten Wählscheibe angeordnetes Sperrelement, das im gesperrten Zustand zwischen der Sperrklinke und einer Führungsplatte eingeklemmt ist, um ein Herausdrücken der Sperrklinke aus einer Zahnlücke des Parksperrenrades zu verhindern. Hierbei ist das Sperrelement auf der Verbindungsstange über ein Federelement angefedert. Üblicherweise erfolgt das Einlegen der Parksperre mechanisch durch die Federkraft einer Einlegefeder.

In modernen Automatgetrieben ist zum Auslegen der Parksperre häufig ein hydraulisches System vorgesehen, bei dem das dem Sperrelement abgewandte Ende der Verbindungsstange an der Wählscheibe angelenkt ist, die ihrerseits mit einer Kolbenstange eines hydraulisch betätigbaren, in einem Parksperrenzylinder angeordneten Parksperrenkolbens wirkverbunden ist, gegen die Kraft der zumeist als Schenkelfeder ausgeführten Einlegefeder zum Auslegen der Parksperre und durch die Kraft der Einlegefeder zum Einlegen der Parksperre axial verschiebbar ist.

Zum Auslegen einer solchen Parksperre wird der Zylinderraum des Parksperrenzylinders mit Druck beaufschlagt und schiebt den Parksperrenkolben und somit die Wählscheibe gegen die Federkraft der Schenkelfeder in die Stellung "P_aus" (Parksperre ausgelegt). Um den Parksperrenkolben des Parksperrenzylinders in dieser Stellung zusätzlich zu verriegeln, ist zumeist ein Magnetventil vorgesehen, welche in dieser Stellung des Parksperrenzylinders elektrisch bestromt wird und hierdurch einen auf den Parksperrenkolben wirkenden Rastmechanismus betätigt.

Zum Einlegen einer solchen Parksperre wird das Magnetventil wieder abgeschaltet, wobei der Zylinderraum des Parksperrenzylinders entlüftet und die mechanische Verriegelung des Parksperrenkolbens gelöst wird. Durch die vorgespannte Schenkelfeder an der Wählscheibe werden die Wählscheibe und somit der Parksperrenkolben in die Stellung "P_ein" (Parksperre eingelegt) gebracht. Hierbei wird das in der Regel als Sperrkegel ausgeführte Sperrelement auf der Führungsplatte unter die Sperrklinke verschoben und wirkt dann derart auf die Sperrklinke, dass ein Zahn dieser Sperrklinke in eine korrespondierende Zahnlücke der Sperrverzahnung des Parksperrenrades eingreifen kann. Bei einer Zahn-auf-Zahn Stellung wird das Federelement, mittels dessen das Sperrelement auf der Verbindungsstange angefedert ist, vorgespannt, sodass, sobald ein Zahn der Sperrklinke eine Zahnlücke trifft, die Sperrklinke in die Sperrverzahnung des Parksperrenrades eingreift.

Eine hydraulisch auslegbare Parksperre weist zumeist auch ein Notentriegelung auf, um die Sperrklinke bei einem Ausfall der hydraulischen Druckversorgung des Automatgetriebes mechanisch aus ihrer Sperrstellung auslegen zu können.

Ein derartiges Parksperrensystem mit einer mechanischen Notentriegelung ist beispielsweise aus der DE 198 37 832 A1 der Anmelderin bekannt. Hierbei wird die Sperrklinke der Parksperre im Normalbetrieb in üblicher Weise über einer Rastenscheibe, die zum mechanischen Einlegen der Parksperre durch die Federkraft einer Einlegefeder und zum hydraulischen Auslegen der Parksperre durch die Druckkraft eines Hydraulikzylinders verdreht wird, mechanisch betätigt. Als Notentriegelung ist zusätzlich eine parallel zur Rastenscheibe angeordnete Kurvenscheibe vorgesehen, die über eine Mitnahme mit der Rastenscheibe derart wirkverbunden ist, dass die Rastenscheibe zum Auslegen der Parksperre im Notbetrieb von der Kurvenscheibe verdrehbar ist, ohne dass die Rastenscheibe im Normalbetrieb die Kurvenscheibe verdreht.

Üblicherweise erfolgt die Druckmittelzuführung zum Hydraulikzylinder eines derartigen Parksperrensystems und auch die Entlüftung dieses Hydraulikzylinders über ein Steuerventil oder mehrere hydraulisch zusammenwirkende Steuerventile des elektrohydraulischen Getriebesteuergerätes, welches von einer Ölpumpe, die ihrerseits von einem zum Antrieb des Getriebes vorgesehenen Motors angetrieben wird, mit Druckmittel versorgt wird. Zur Absicherung gegen ein ungewolltes Auslegen der Parksperre infolge einer beim Starten des Motors vorliegenden Fehlstellung eines oder mehrerer dieser auf den Hydraulikzylinder des Parksperrensystems wirkenden Steuerventile schlägt die DE 10 2012 210 571 A1 der Anmelderein vor, die Kolbenstange des Hydraulikzylinders mit zwei elektromagnetisch betätigbaren Verriegelungen auszustatten, die vom gleichen Elektromagneten betätigt werden. Dabei blockiert die erste Verriegelung die Kolbenstange mechanisch in derjenigen Stellung, die dem ausgelegten Zustand der Parksperre zugeordnet ist und dann vorliegt, wenn der Hydraulikzylinder drucklos ist. Die zweite Verriegelung hingegen blockiert die Kolbenstange mechanisch in derjenigen Stellung, die dem eingelegten Zustand der Parksperre zugeordnet ist und schützt damit das Parksperrensystem gegen ein ungewolltes - also fehlerbedingtes - Auslegen der zuvor ordnungsgemäß eingelegten Parksperre. Der Fachmann bezeichnet ein derartiges Parksperren-Betätigungssystem als "hydraulisch betätigbarer Parksperrenaktuator mit bi-stabiler Kolben-Verriegelung". Bei einem Ausfall des elektrohydraulischen Getriebesteuergerätes ist es jedoch nicht mehr möglich, die in der Regel formschlüssige mechanische Rastierung über den Elektromagneten wieder freizugeben, da die elektrische Ansteuerung funktionslos ist. Eine auf die Kolbenstange mechanisch wirkende Notentriegelung zum manuellen Auslegen der Parksperre ist bei diesem Parksperrensystem daher unbrauchbar. Eine weitere Parksperre geht aus der DE102006012343 A1 hervor, auf welcher die zweiteilige Fassung des Anspruchs 1 basiert.

Aus der nicht vorveröffentlichten Patentanmeldung DE 102017210069.9 der Anmelderin geht eine sehr kompakte Parksperreneinheit hervor, bei der die Verbindungsstange mit dem Sperrelement der Parksperre parallel zur Sperrklinke und senkrecht zu einem im Getriebegehäuse eingesetzten Klinkenbolzen angeordnet ist, an dem die Sperrklinke der Parksperre und auch die Wählscheibe der Parksperre verschwenkbar gelagert sind. Dabei ist das dem Sperrelement gegenüberliegenden Ende der Verbindungsstange gelenkig mit der Wählscheibe verbunden.

Zum Auslegen dieser Parksperre ist ein mit Druck beaufschlagbarer Hydraulikkolben vorgesehen, dessen Kolbenstange ebenfalls gelenkig mit der Wählscheibe verbunden ist, sodass jede Axialbewegung des Hydraulikkolbens eine Axialbewegung der Verbindungsstange bewirkt. Dabei ist die Kolbenstange sowohl in einer ersten Endlage, die dem Zustand "Parksperre eingelegt" zugeordnet ist, als auch in einer zweiten Endlage, die dem Zustand "Parksperre ausgelegt" zugeordnet ist, elektromagnetisch verrastbar.

Zum Einlegen dieser Parksperre ist eine Einlegefeder vorgesehen, die zwischen Getriebegehäuse und Wählscheibe derart eingespannt ist, dass ihre Federkraft gegen die Kolbenkraft des Hydraulikkolbens wirkt und dann, wenn der Hydraulikkolben nicht mit Druck beaufschlagt ist, die Wählscheibe in eine Stellung verdreht, die dem Zustand "Parksperre eingelegt" zugeordnet ist. Diese Einlegefeder kann als Schenkelfeder ausgeführt sein, deren Windungen den Klinkenbolzen konzentrisch umschließen, alternativ als Druckfeder, die die Kolbenstange des Hydraulikkolbens konzentrisch umschließt. Ferner ist an der Wählscheibe eine Niederhaltefeder eingehängt und dabei derart vorgespannt, dass ihre Federkraft die Sperrklinke dann, wenn die Parksperre ausgelegt ist, im ausgelegten Zustand hält.

Der vorliegenden Erfindung liegt die Aufgabe zugrunde, die in der nicht vorveröffentlichten Patentanmeldung DE 102017210069.9 beschriebene Parksperre für ein Automatgetriebe dahingehend weiterzuentwickeln, dass eine Notentriegelung der Parksperre möglich ist, ohne auf die kompakte Bauform und die anderen Vorteile der DE 102017210069.9 verzichten zu müssen.

Diese Aufgabe wird durch eine Parksperre mit den Merkmalen des Patentanspruchs 1 gelöst. Weitere erfindungsgemäße Ausgestaltungen und Vorteile gehen aus den Unteransprüchen hervor.

Demnach geht die Erfindung aus von einer Parksperre für ein Automatgetriebe in einem Kraftfahrzeug, die ein Parksperrenrad, das eine Sperrverzahnung mit Zahnlücken aufweist und verdrehfest mit einer Getriebewelle verbunden ist, eine Sperrklinke, die auf einem Klinkenbolzen verschwenkbar gelagert ist und einen Klinkenzahn aufweist, der im eingelegten Zustand der Parksperre in eine Zahnlücke der Sperrverzahnung des Parksperrenrades eingreift und hierdurch Parksperrenrad und Getriebewelle gegen Rotation blockiert, einen Schalthebel, der zur Vorgabe der Schaltstellung der Parksperre um eine Schalthebel-Drehachse verdrehbar ist, eine gelenkig mit dem Schalthebel verbundene Verbindungsstange mit einem gegen Parksperrenauslegerichtung angefederten Sperrelement, welches beim Einlegen der Parksperre das Eingreifen des Klinkenzahns der Sperrklinke in eine Zahnlücke der Sperrverzahnung des Parksperrenrades bewirkt und im eingelegten Zustand der Parksperre ein Herausdrücken des Klinkenzahns der Sperrklinke aus der Zahnlücke der Sperrverzahnung des Parksperrenrades verhindert, eine Einlegefeder, deren Federkraft in Parksperreneinlegerichtung auf den Schalthebel wirkt, sowie einen hydraulisch betätigbaren Aktuator, dessen Druckkraft in Parksperrenauslegerichtung auf den Schalthebel wirkt, umfasst. Dabei ist das dem Sperrelement abgewandte Ende der Verbindungsstange gelenkig mit dem Schalthebel verbunden.

Zusätzlich umfasst die erfindungsgemäße Parksperre eine Notentriegelungsvorrichtung, die mechanisch derart mit dem Schalthebel in Wirkverbindung bringbar ist, dass die Parksperre manuell auslegbar ist.

Erfindungsgemäß weist der Aktuator zwei auf gleicher Längsachse axial in einem Aktuatorgehäuse verschiebbar angeordnete Kolben und eine in dem Aktuatorgehäuse angeordnete elektromagnetisch aktuierbare Rastiervorrichtung auf. Dabei ist der erste Kolben zum Auslegen der Parksperre hydraulisch mit Druck beaufschlagbar und verschiebt bei Druckbeaufschlagung den zweiten Kolben gegen die Federkraft der Einlegefeder in axiale Richtung. Der zweite Kolben ist dabei mechanisch derart mit dem Schalthebel verbunden, dass eine Axialbewegung des zweiten Kolbens eine Verdrehung des Schalthebels um eine Schalthebel-Drehachse bewirkt und umgekehrt. Die Rastiervorrichtung ist von einem Elektromagneten derart aktuierbar, dass die Rastiervorrichung den ersten Kolben entweder in einer dem eingelegten Zustand der Parksperre zugeordneten Kolbenstellung oder in einer dem ausgelegten Zustand der Parksperre zugeordneten Kolbenstellung mechanisch rastiert, wenn der Elektromagnet unbestromt ist, und dass der Elektromagnet zum Lösen der Rastierung in der jeweiligen Kolbenstellung bestromt werden muss. Eine derartige Rastiervorrichtung kann auch als "bi-stabile Rastierung des ersten Kolbens" bezeichnet werden.

Dies erfindungsgemäße Anordnung ermöglicht in besonders vorteilhafter Weise, dass im Falle einer Betätigung der Notentriegelungsvorrichtung der zweite Kolben von dem Schalthebel axial verschoben werden kann, ohne dass der erste Kolben seine rastierte, dem eingelegten Zustand der Parksperre entsprechende Kolbenstellung verlässt.

Vorzugsweise sind der erste und zweite Kolben in Richtung der Längsachse gesehen hintereinander angeordnet. Hierbei kann auch vorgesehen sein, dass die Einlegefeder als Druckfeder ausgeführt ist, die axial zwischen dem zweiten Kolben und dem Aktuatorgehäuse eingespannt ist und dabei axial betrachtet eine Kolbenstange des zweiten Kolbens ganz oder teilweise konzentrisch umschließt.

In einer Ausgestaltung der Erfindung umfasst die Parksperre zusätzlich auch eine getriebegehäusefeste Führungsvorrichtung, die als Führungsplatte oder als Führungshülse ausgebildet ist, gegen die sich die Sperrvorrichtung gegen eine Normalkraft der Sperrklinke beim Einlegen und Auslegen der Parksperre abstützt. Eine derartige Führungsvorrichtung kann direkt am Aktuatorgehäuse befestigt sein, kann alternativ aber auch ein integraler Bestandteil des Aktuatorgehäuses sein.

In einer anderen Ausgestaltung der Erfindung wird vorgeschlagen, dass bei Betätigung der Notentriegelungsvorrichtung ein innerhalb eines Getriebegehäuses des Automatgetriebes angeordneter Innenhebel der Notentriegelungsvorrichtung mechanisch direkt auf den Schalthebel wirkt. Alternativ hierzu kann vorgesehen sein, dass bei Betätigung der Notentriegelungsvorrichtung ein innerhalb eines Getriebegehäuses des Automatgetriebes angeordneter Innenhebel der Notentriegelungsvorrichtung mechanisch direkt auf die Kolbenstange des zweiten Kolbens wirkt, sodass der Innenhebel über die Kolbenstange auf den Schalthebel wirkt.

In einer weiteren Ausgestaltung der Erfindung wird vorgeschlagen, den Schalthebel auf dem Klinkenbolzen verdrehbar zu lagern, sodass Schalthebel-Drehachse, Klinkenbolzen-Längsachse und Sperrklinken-Schwenkachse identisch sind. Dabei kann die am Schalthebel gelenkig befestigte Verbindungsstange derart unterhalb der Sperrklinke angeordnet sein, dass die Bewegungsebene der Verbindungsstange im Wesentlichen parallel zur Bewegungsebene von Sperrklinke, Schalthebel und Kolbenstange angeordnet ist. Aufgrund einer solchen Anordnung von Schalthebel und Klinkenbolzen kann die Lagerbasis der Klinkenbolzenlagerung zur Abstützung des Klinkenbolzens vergleichsweise klein dimensioniert werden. Auch kann vorgesehen sein, dass der Schalthebel zwei Schenkel aufweist, die jeweils eine kreisrunde Bohrung aufweisen, wobei diese Bohrungen koaxial zueinander angeordnet sind und der Lagerung des Schalthebels auf dem Klinkenbolzen dienen, wobei die Sperrklinke zwischen den beiden Schenkeln gelagert ist. Durch diese Ausgestaltung werden in vorteilhafter Weise Reibeinflüsse minimiert. Im Ergebnis ergibt sich eine äußerste kompakte und robuste Konstruktion einer Baugruppe zur Aktuierung der Parksperre.

In einer Weiterbildung der Erfindung wird vorgeschlagen, an dem auf die Sperrklinke wirkenden Schalthebel eine Niederhaltefeder zu befestigen oder einzuhängen, welche im ausgelegten Zustand der Parksperre ein Berühren der Sperrklinke an dem Parksperrenrad verhindert. Hierdurch kann die zuvor vorgeschlagenen Anordnung und konstruktiven Ausbildung der optimierten Abstützung der Sperrklinke um einen weiteren Funktionsvorteil erweitert werden: Im ausgelegten Zustand der Parksperre verhindert eine jetzt immer noch auf die Sperrklinke wirkende Federkraft der Niederhaltefeder zuverlässig, dass die Sperrklinke das Parksperrenrad berührt, wodurch ein Ratschen der Sperrklinke zuverlässig verhindert wird.

Vorzugsweise kommt dabei ein kraftübertragender Abschnitt der Niederhaltefeder - beispielsweise ein freies Ende der Niederhaltefeder - nur dann mit der Sperrklinke kraftschlüssig in Kontakt, wenn der Schalthebel ausgehend von seiner Stellung im eingelegten Zustand der Parksperre um einen vordefinierten Winkel in Richtung seiner Stellung im ausgelegten Zustand der Parksperre verdreht wird, sodass erst dann, wenn dieser kraftübertragende Abschnitt der Niederhaltefeder kraftschlüssig auf die Sperrklinke wirkt, die auf die Sperrklinke wirkende Kraft der Niederhaltefeder einen Kontakt zwischen Sperrklinke und Parksperrenrad verhindert.

Alternativ hierzu kann die Niederhaltefeder an dem Schalthebel beispielsweise derart vorgespannt ist, dass ein kraftübertragender Abschnitt der Niederhaltefeder bereits mit der Sperrklinke kraftschlüssig in Kontakt ist, wenn sich der Schalthebel in seiner Stellung im eingelegten Zustand der Parksperre befindet, wobei dann, wenn der Schalthebel ausgehend von seiner Stellung im eingelegten Zustand der Parksperre in Richtung seiner Stellung im ausgelegten Zustand der Parksperre verdreht wird, sich die auf die Sperrklinke wirkende Kraft der Niederhaltefeder derart erhöht, dass ein Kontakt zwischen Sperrklinke und Parksperrenrad sicher verhindert wird.

In kostengünstiger Weise kann die Niederhaltefeder als Biegefeder aus Federdraht ausgebildet sein.

Die Erfindung wird im Folgenden anhand der beigefügten Figuren beispielhaft näher erläutert. Darin zeigen:
- Fig. 1: ein erstes Ausgestaltungsbeispiel einer erfindungsgemäßen Parksperre in Schaltstellung "Parksperre eingelegt" in schematischer perspektivischer Darstellung;
- Fig. 2: die Parksperre gemäß Fig. 1 in Schaltstellung "Parksperre eingelegt" in schematischer Schnittdarstellung;
- Fig. 3: die Parksperre gemäß Fig. 1 in Schaltstellung "Parksperre ausgelegt" in schematischer Schnittdarstellung;
- Fig. 4: die Parksperre gemäß Fig. 1 in Schaltstellung "Parksperre notentriegelt" in schematischer Schnittdarstellung;
- Fig. 5: ein Lagerungskonzept der Notentriegelungsvorrichtung der Parksperre gemäß Fig. 1 in schematischer Schnittdarstellung;
- Fig. 6: ein zweites Ausgestaltungsbeispiel einer erfindungsgemäßen Parksperre in Schaltstellung "Parksperre eingelegt" in schematischer Schnittdarstellung;
- Fig. 7: ein zweites Ausgestaltungsbeispiel einer erfindungsgemäßen Parksperre in Schaltstellung "Parksperre eingelegt" in schematischer Schnittdarstellung;
- Fig. 8A: eine perspektivische Darstellung einer alternativen Notentriegelungsvorrichtung;
- Fig. 8B: eine Schnittdarstellung der Notentriegelungsvorrichtung gemäß Fig. 8A;
- Fig. 8C: eine Seitenansicht der Notentriegelungsvorrichtung gemäß Fig. 8A in Schaltstellung "Parksperre eingelegt"; und
- Fig. 8D: eine Seitenansicht der Notentriegelungsvorrichtung gemäß Fig. 8A in Schaltstellung "Parksperre notausgelegt".

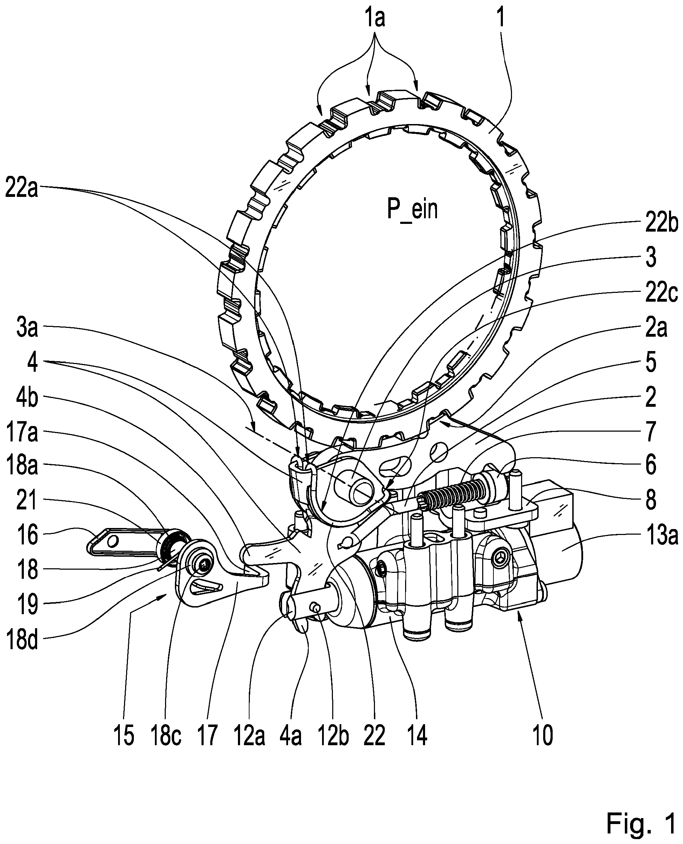

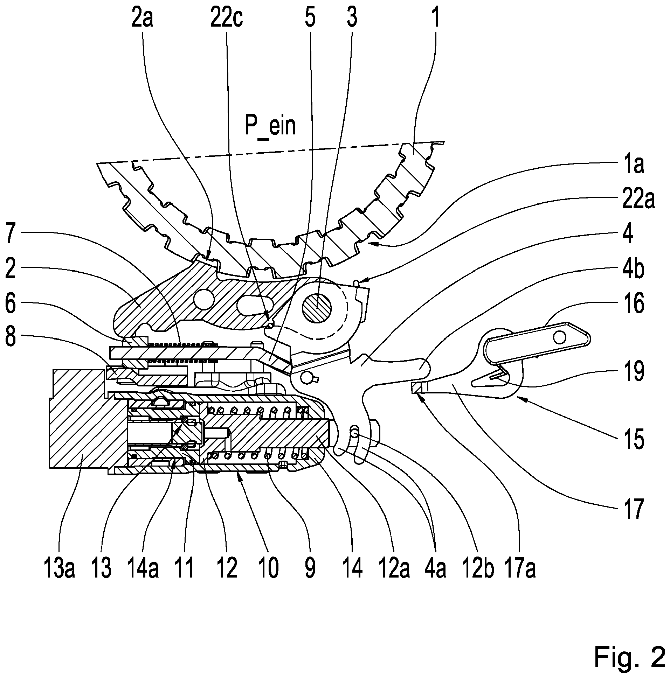

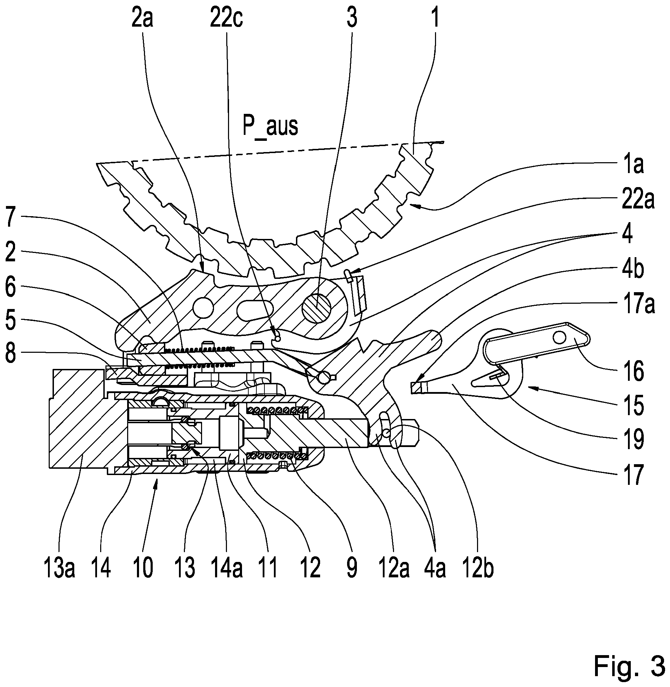

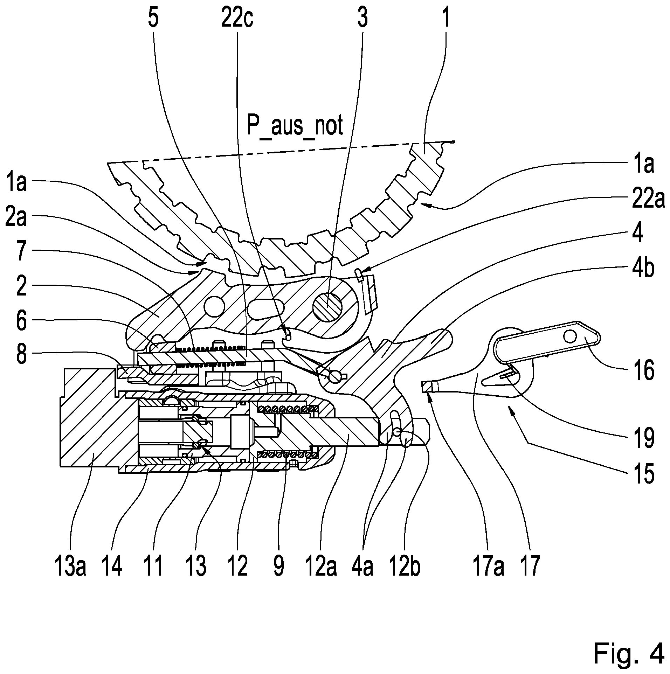

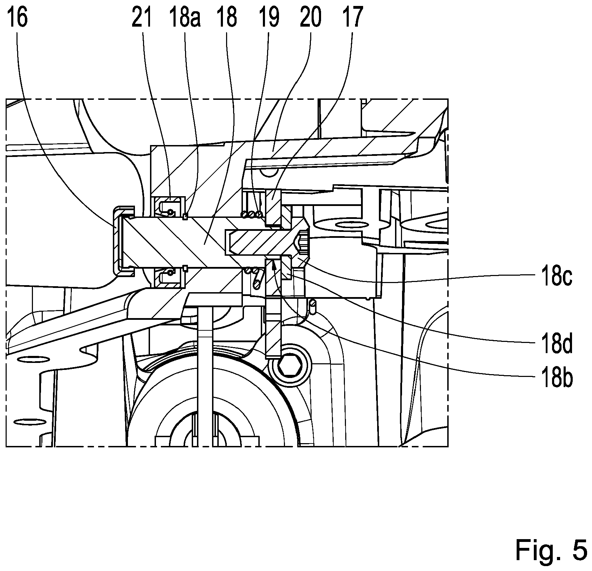

Nachfolgend und bezugnehmend auf die **Figuren 1 bis 5** wird ein bevorzugtes erstes Ausgestaltungsbeispiel einer erfindungsgemäßen Parksperre für ein Automatgetriebe eines Kraftfahrzeugs näher beschrieben. **Figur 1** zeigt eine dreidimensionale Darstellung dieser Parksperre in Schaltstellung "Parksperre eingelegt", gekennzeichnet durch das Bezugszeichen P ein. **Figur 2** zeigt eine entsprechende Schnittdarstellung hierzu. **Figur 3** hingegen zeigt eine Schnittdarstellung dieser Parksperre in Schaltstellung "Parksperre ausgelegt", gekennzeichnet durch das Bezugszeichen P_aus. **Figur 4** zeigt eine Schnittdarstellung dieser Parksperre in einer Schaltstellung "Parksperre notentriegelt", bei der die Parksperre infolge einer Betätigung der Notentriegelungsvorrichtung ausgelegt wurde, gekennzeichnet durch das Bezugszeichen P_aus_not. **Figur 5** schließlich zeigt eine Schnittdarstellung ein Beispiel für ein Lagerungskonzept der Notentriegelungsvorrichtung dieser Parksperre.

Die in den **Figuren 1 bis 4** gezeigte Parksperre umfasst eine auf einem Klinkenbolzen 3 schwenkbar gelagerte Sperrklinke 2, deren Klinkenzahn 2a in eine Zahnlücke 1a eines mit der hier nicht näher dargestellten Getriebewelle des Automatgetriebes verbundenen Parksperrenrades 1 je nach Schaltstellung P_ein, P aus der Parksperre einrastet oder ausrastet. Auch umfasst diese Parksperre ein auf einer Verbindungsstange 5 zu einem Schalthebel 4 angeordnetes, über ein Federelement 7 angefedertes Sperrelement 6, welches im gesperrten Zustand - also im Schaltzustand "Parksperre eingelegt" - zwischen der Sperrklinke 2 und einer getriebegehäusefesten Führungsplatte 8 eingeklemmt ist, um ein Herausdrücken des Klinkenzahns 2a aus der entsprechenden Zahnlücke 1a des Parksperrenrades 1 zu verhindern. Das gegen die Parksperrenauslegerichtung angefederte Sperrelement 6 ist beispielhaft als Sperrkegel ausgebildet, kann alternativ beispielsweise als ein Rollenelement ausgebildet sein.

In bauraumsparender Weise ist der Schalthebel 4 auf dem Klinkenbolzen 3 verdrehbar gelagert, sodass Klinkenbolzen-Längsachse 3a, Sperrklinken-Schwenkachse und Schalthebel-Drehachse identisch sind. In dem hier dargestellten Ausführungsbeispiel weist der Schalthebel 4 zwei Schenkel mit jeweils einer kreisrunde Bohrung auf, wobei diese Bohrungen koaxial zueinander angeordnet sind und der Lagerung des Schalthebels 4 auf dem Klinkenbolzen 3 dienen, wobei die Sperrklinke 2 zwischen diesen beiden Schenkeln gelagert ist.

Das dem Sperrelement 6 abgewandte Ende der Verbindungsstange 5 ist gelenkig mit dem Schalthebel 4 verbunden. Um die Parksperre Ein- und Auslegen zu können, weist der Schalthebel 4 einen Mitnehmer 4a auf, der mit einem hydraulisch betätigbaren Aktuator 10 verbunden ist, mittels dem die Schaltstellung der Parksperre vorgebbar ist.

Wesentlich bei dem hier dargestellten ersten Ausführungsbeispiel der Erfindung ist, dass dieser Aktuator 10 einen ersten Kolben 11 und einen zweiten Kolben 12 umfasst, die auf gleicher Längsachse in einem Steuergehäuse 14 des Aktuators 10 axial verschiebbar angeordnet sind, wobei nur der erste Kolben 11 zum Auslegen der Parksperre hydraulisch mit Druck beaufschlagbar ist. Bei Druckbeaufschlagung verschiebt der erste Kolben 11 den zweiten Kolben 12 in axialer Richtung gegen die Federkraft einer Einlegefeder 9, die ihrerseits als eine axial zwischen dem zweiten Kolben 12 und dem Aktuatorgehäuse 14 eingespannte Druckfeder ausgeführt ist und axial betrachtet eine Kolbenstange 12a des zweiten Kolbens 12 konzentrisch umschließt. Der zweite Kolben 12 ist über einen in die Kolbenstange 12a eingesetzten Stift 12b, der in den Mitnehmer 4a des Schalthebels 4 eingreift, mechanisch mit dem Schalthebel 4 verbunden ist, sodass eine Axialbewegung des zweiten Kolbens 12 eine Verdrehung des Schalthebels 4 um die Schalthebel-Drehachse 3a bewirkt. Andererseits bewirkt eine Verdrehung des Schalthebels 4 um seine Drehachse 3a stets auch eine Axialbewegung des zweiten Kolbens 12.

Wesentlich bei dem hier dargestellten ersten Ausführungsbeispiel der Erfindung ist auch, dass der Aktuator 10 für seinen ersten Kolben 11 eine bi-stabile Rastiervorrichtung 13 aufweist, die innerhalb des Aktuatorgehäuses 14 - hierbei beispielhaft zentrisch innerhalb des ersten Kolbens 11 - angeordnet ist und von einem am Aktuatorgehäuse 14 angeordneten Elektromagneten 13a elektromagnetisch derart aktuierbar ist, dass die Rastiervorrichtung 13 den ersten Kolben 11 entweder in einer dem eingelegten Zustand P ein der Parksperre zugeordneten Kolbenstellung oder in einer dem ausgelegten Zustand P aus der Parksperre zugeordneten Kolbenstellung mechanisch rastiert, wenn der Elektromagnet 13a nicht bestromt ist. Zum Lösen der Rastierung in der jeweiligen Kolbenstellung des ersten Kolbens 11 muss der Elektromagnet 13a bestromt werden.

In dem hier dargestellten Ausführungsbeispiel ist die am Schalthebel 4 gelenkg befestigte Verbindungsstange 5 räumlich gesehen unterhalb der Sperrklinke 2 parallel zur Sperrklinke 2 und senkrecht zum Klinkenbolzen 3 angeordnet, sodass die Bewegungsebene der Verbindungsstange 5 im Wesentlichen parallel zur Bewegungsebene von Sperrklinke 2, Schalthebel 4 und Kolbenstange 12a angeordnet ist. Diese spezielle Anordnung ist in vorteilhafter Weise sehr bauraumsparend.

Die Führungsplatte 8 ist in dem hier dargestellten Ausführungsbeispiel an dem Steuergehäuse 14 des Aktuators 10 befestigt, kann alternativ aber auch als integraler Bestandteil des Steuergehäuses 14 ausgebildet sein. Anstelle der Ausbildung als Führungsplatte 8 kann die getriebegehäusefeste Führungsvorrichtung, gegen die sich die Sperrvorrichtung 6 gegen eine Normalkraft der Sperrklinke 2 beim Einlegen und Auslegen der Parksperre abstützt, beispielsweise als Führungshülse ausgebildet sein, die dann an dem Steuergehäuse 14 befestigt oder in das Steuergehäuse des Aktuators 10 integriert ist. Das Steuergehäuse 14 selber kann beispielsweise auch ein integraler Bestandteil eines elektrohydraulischen Getriebesteuergerätes des Automatgetriebes sein.

In dem hier dargestellten Ausführungsbeispiel umfasst die Parksperre zusätzlich eine Niederhaltefeder 22, die an dem Schalthebel 4 eingehängt ist und im ausgelegten Zustand P_aus der Parksperre ein Berühren der Sperrklinke 2 an dem Parksperrenrad 1 verhindert. Die Besonderheit dieser Niederhaltefeder 22 ist die Art ihrer Abstützung an dem Schalthebel 4: Die Niederhaltefeder 22 ist an dem Schalthebel 4 derart vorgespannt, dass ein kraftübertragender Abschnitt der Niederhaltefeder 22 nur dann mit der Sperrklinke 2 kraftschlüssig in Kontakt kommt, wenn der Schalthebel 4 ausgehend von seiner Stellung im eingelegten Zustand P_ein der Parksperre um einen vordefinierten Winkel in Richtung seiner Stellung im ausgelegten Zustand P_aus der Parksperre verdreht wird. Somit verhindert die auf die Sperrklinke 2 wirkende Kraft der Niederhaltefeder 22 einen Kontakt zwischen Sperrklinke 2 und Parksperrenrad 1erst dann, wenn dieser kraftübertragende Abschnitt der Niederhaltefeder 22 kraftschlüssig auf die Sperrklinke 2 wirkt. Somit kann die Niederhaltefeder 22 nur bei ausgelegter Parksperre ihre Wirkung entfalten. Wenn sich der Schalthebel 4 in seine zum Einlegen der Parksperre vorgesehene Stellung dreht, gibt die Niederhaltefeder 22 die Sperrklinke 2 frei und die Niederhaltefeder 22 dreht sich mit dem Schalthebel 4 bzw. mittels des Schalthebels 4 weg von seinem Anschlagpunkt auf der Sperrklinke 2, sodass der Klinkenzahn 2a der Sperrklinke 2 jetzt ohne Gegenkraft der Niederhaltefeder 22 - also nur durch die Federkraft der Einlegfeder 9 - in eine Zahnlücke 1a des Parksperrenrades 1 einfallen kann.

Die Abstützung der Niederhaltefeder 22 an dem Schalthebel 4 ermöglicht eine geometrische Ausgestaltung des Schalthebels 4 mit zwei Einhängeausnehmung für eine verliersichere Befestigung der Niederhaltefeder 22. Ein weiterer Vorteil einer derartigen Ausgestaltung ist, dass die Lage dieser beiden Einhängeausnehmungen relativ zueinander einen weiten Auslegungsspielraum für die effektiv auf die Sperrklinke 2 wirkende Kraft der Niederhaltefeder 22 eröffnet. So ist der Arbeitsbereich der Niederhaltefeder 22 trotz kleinem Drehwinkel des Schalthebels 4 in weiten Grenzen auf die jeweilige Anwendung anpassbar. Auch ermöglicht diese Art der Vorspannung der Niederhaltefeder 22 an dem Schalthebel 4 eine flache Federkennlinie, mit dem Vorteil einer hohen Niederhaltekraft bei wenig Sperrklinkenhub.

In dem hier dargestellten Ausführungsbeispiel ist die Niederhaltefeder 22 als kostengünstig aus Federdraht gefertigte Biegefeder mit zwei Schenkeln 22b ausgebildet. Dabei erstecken sich beide Schenkel der Niederhaltefeder 22 im Wesentlichen planparallel zur Sperrklinke 2. Ein abgekröpfter mittlerer Abschnitt 22c der Niederhaltefeder 22 erstreckt sich parallel zum Klinkenbolzen 3 (bzw. parallel zur Klinkenbolzen-Längsachse 3a) und verbindet die beiden Schenkel 22b der Niederhaltefeder 22 miteinander. Auf dem dem mittleren Abschnitt 22c gegenüberliegendem Ende der beiden Schenkel 22b weist die Einlegefeder 22 jeweils ein freies Ende 22a auf, von denen eines am ersten der beiden Schenkel des Schalthebels 4 und das andere am zweiten der beiden Schenkel des Schalthebels eingehängt ist. Somit umgreift die Niederhaltefeder 22 die beiden Schenkel des Schalthebels 4. Bei dieser konstruktiven Ausbildung verhindert die auf die Sperrklinke 2 wirkende Kraft der Niederhaltefeder 22 einen Kontakt zwischen Sperrklinke 2 und Parksperrenrad 1 erst dann, wenn der mittlere Abschnitt 22c der Niederhaltefeder 22 kraftschlüssig auf die Sperrklinke 2 wirkt. Somit bildet der mittlere Abschnitt 22c der Niederhaltefeder 22 einen Anschlag für die Sperrklinke 2.

Im Ergebnis erfolgt ein Einlegen der Parksperre im Wesentlichen durch Federkraft der Einlegefeder, wohingegen ein Auslegen der Parksperre im Wesentlichen durch die auf den ersten Kolben 11 aufgebrachte hydraulische Druckkraft des Aktuators 10 gegen die Federkraft der Einlegefeder erfolgt, sofern die zum Ansteuern des Aktuators 10 notwendige hydraulische und elektrische Versorgung zur Verfügung steht.

Wie bereits angedeutet, umfasst die Parksperre auch eine mit Bezugszeichen 15 gekennzeichnete Notentriegelungsvorrichtung, mittels der die Parksperre bei Ausfall der hydraulischen und/oder elektrischen Ansteuerung des Aktuators 10 mechanisch vom Zustand P_ein in den Zustand P_aus überführbar ist. Hierzu ist die Notentriegelungsvorrichtung 15 mechanisch mit dem Schalthebel 4 in Wirkverbindung bringbar. In dem hier dargestellten Ausführungsbeispiel umfasst die Notentriegelungsvorrichtung 15 einen außen am Getriebegehäuse 20 des Automatgetriebes angeordneten Außenhebel 16 und einen im Innenraum des Getriebegehäuses 20 angeordneten Innenhebel 17, der verdrehfest mit diesem Außenhebel 17 verbunden ist. Der Innenhebel 17 weist einen Schenkel 17a auf, der im Falle einer Betätigung der Notentriegelungsvorrichtung 15 mechanisch direkt auf einen Schenkel 4b des Schalthebels 4 wirkt, sodass sich der Schalthebel 4 auf seiner Drehachse (3a) in die zum Auslegen der Parksperre vorgesehene Drehrichtung verdreht.

Wesentlich bei dem hier dargestellten ersten Ausführungsbeispiel der Erfindung ist, dass der Aktuator 10 für seinen ersten Kolben 11 eine bi-stabile Rastiervorrichtung 13 aufweist, die innerhalb des Aktuatorgehäuses 14 - hierbei beispielhaft zentrisch innerhalb des ersten Kolbens 11 - angeordnet ist und von einem am Aktuatorgehäuse 14 angeordneten Elektromagneten 13a elektromagnetisch derart aktuierbar ist, dass die Rastiervorrichtung 13 den ersten Kolben 11 entweder in einer dem eingelegten Zustand P ein der Parksperre zugeordneten Kolbenstellung oder in einer dem ausgelegten Zustand P_aus der Parksperre zugeordneten Kolbenstellung mechanisch gegen axiale Bewegung blockiert, wenn der Elektromagnet 13a nicht bestromt ist. Zum Lösen der Rastierung in der jeweiligen Kolbenstellung des ersten Kolbens 11 muss der Elektromagnet 13a bestromt werden.

Erst die besondere Ausbildung des Aktuators 10 mit seinen zwei Kolben 11, 12 ermöglicht, dass im Falle einer Betätigung der Notentriegelungsvorrichtung 15 der zweite Kolben 12 des Aktuators 10 von dem Schalthebel 4 axial verschoben werden kann, ohne dass der erste Kolben 11 des Aktuators 10 dabei seine dem eingelegten Zustand P ein der Parksperre entsprechende Kolbenstellung verlässt, was im Folgenden anhand der Funktionsabläufe beim Ein- und Auslegen der Parksperre näher erläutert wird.

Ausgehend vom Zustand P_ein, bei dem die Parksperre eingelegt ist, bedingt die erfindungsgemäße Ausgestaltung des Aktuators 10 beim Auslegen der Parksperre im Normalbetrieb des Automatgetriebes bei gesicherter hydraulischer und elektrischer Versorgung des Aktuators 10 folgenden Funktionsablauf: Im Ausgangszustand P_ein ist ein Druckraum 14a, der durch eine Mantelfläche des Steuergehäuses 14 und eine Stirnfläche des ersten Kolbens 11 gebildet wird, steuergerätseitig entlüftet. Die beiden Kolben 11 und 12 des Aktuators 10 befinden sich in ihrer dem Elektromagneten 13a zugewandten ersten Endlage, so wie in Figur 2 gezeigt, wobei der erste Kolben 11 von der Rastiervorrichtung 13 mechanisch festgesetzt ist. Der Elektromagnet 13a der Rastvorrichtung 13 ist stromlos. Der Sperrkegel 6 befindet sich in seiner Sperrstellung, in der er zwischen Führungsplatte 8 und Sperrklinke 2 eingeklemmt ist. Um die Parksperre ausgehend von der Schaltstellung P_ein überhaupt auslegen zu können, wird zunächst der Elektromagnet 13a bestromt, mit der Folge, dass die Rastiervorrichtung 13 den zuvor von ihr blockierten ersten Kolben 11 freigibt. Etwa zeitgleich wird der zuvor drucklose Druckraum 14a des Aktuators 10 mit Druck beaufschlagt, mit der Folge, dass sich der erste Kolben 11 durch die auf ihn wirkende Druckkraft gegen die Federkraft der Einlegefeder 9 axial in zum Druckraum entgegengesetzte Richtung bewegt und dabei den zweiten Kolbens 12 mitnimmt, bis eine vordefinierte zweite Endlage erreicht ist. Die Axialbewegung des zweiten Kolbens 12 wiederum wird über den in der Kolbenstange 12a eingesetzten Stift 12b und die Mitnahme 4a des Schalthebels 4 in eine Drehbewegung des Schalthebels 4 um seine Drehachse (3a) in der zum Auslegen der Parksperre vorgesehene Drehrichtung umgesetzt. Diese Drehbewegung des Schalthebels 4 wird über die Verbindungsstange 5 auf den Sperrkegel 6 übertragen, sodass der Sperrkegel 6 mechanisch aus seiner Sperrstellung gezogen wird, mit der Folge, dass die Sperrklinke 2 infolge der auf sie wirkenden Kraftvektoren verschwenkt wird und dabei der Klinkenzahn 2a aus der Zahnlücke 1a der Sperrverzahnung des Parksperrenrades 1 ausschwenkt. Die Parksperre befindet sich nun im Zustand P_aus; alle beteiligten Bauteile befinden sich nun in der in Figur 3 dargestellten Position. In diesem Zustand wird jetzt der Elektromagnet 13b wieder stromlos geschaltet, sodass die Rastiervorrichtung 13 den ersten Kolben 11 in seiner dem Elektromagneten 13a abgewandten zweiten Endlage mechanisch festsetzt. Diese mechanische Rastierung des ersten Kolbens 11 sichert das Parksperrensystem gegen ein ungewolltes Einlegen der Parksperre ab, was beispielsweise bei einem situativ nicht ausreichenden Druckniveau oder bei einem hydraulischen Defekt in der Druckzuführung zum Druckraum 14a des Aktuators 10 möglich wäre.

Ausgehend vom Zustand P_aus, bei dem die Parksperre ausgelegt ist, bedingt die erfindungsgemäße Ausgestaltung des Aktuators 10 beim Einlegen der Parksperre im Normalbetrieb des Automatgetriebes bei gesicherter hydraulischer und elektrischer Versorgung des Aktuators 10 folgenden Funktionsablauf: Im Ausgangszustand P_aus ist der auf den ersten Kolben 11 wirkende Druckraum 14a des Aktuators 10 mit Druck beaufschlagt. Beide Kolben 11, 12 des Aktuators 10 befinden sich in deren jeweiligen zweiten Endlage, die wie in Figur 3 gezeigt dem Elektromagneten 13a abgewandt ist, wobei der erste Kolben 11 durch die Rastiervorrichtung 13 mechanisch festgesetzt ist. Der Elektromagnet 13a der Rastvorrichtung 13 ist stromlos. Um die Parksperre ausgehend von der Schaltstellung P_aus überhaupt einlegen zu können, wird zunächst der Elektromagnet 13a bestromt, mit der Folge, dass die Rastiervorrichtung 13 den zuvor durch sie blockierten ersten Kolben 11 freigibt. Etwa zeitgleich wird der zuvor mit Druck beaufschlagte Druckraum 14a des Aktuators 10 steuergerätseitig entlüftet, mit der Folge, dass sich der zweite Kolben 12 durch die Federkraft der Einlegefeder 9 axial in Richtung des ersten Kolbens 11 bewegt. Diese Axialbewegung des zweiten Kolbens 12 wird zum einen mechanisch auf den ersten Kolben 11 übertragen, der infolge dessen axial in seine dem Elektromagneten 13a zugewandten ersten Endlage geschoben wird. Zum anderen wird die Axialbewegung des zweiten Kolbens 12 über den in der Kolbenstange 12a eingesetzten Stift 12b und die Mitnahme 4a des Schalthebels 4 in eine Drehbewegung des Schalthebels 4 um seine Drehachse (3a) in der zum Einlegen der Parksperre vorgesehene Drehrichtung umgesetzt. Diese Drehbewegung des Schalthebels 4 wiederum wird über die Verbindungsstange 5 auf den Sperrkegel 6 und über den Sperrkegel 6 auf die Sperrklinge 2 übertragen, mit der Folge, dass dann, wenn der Klingenzahn 2a auf eine Zahnlücke 1a der Sperrverzahnung des Parksperrenrades 1 trifft und nicht durch eine zu große Drehzahl des Parksperrenrades 1 vom Außendurchmesser der Sperrverzahnung wieder abgewiesen wird, der Klingenzahn 2a in diese Zahnlücke 1a formschlüssig eingreift und hierdurch das Parksperrenrad 1 festsetzt. Die Parksperre befindet sich nun im Zustand P_ein; alle beteiligten Bauteile befinden sich nun wieder in der in Figur 2 dargestellten Position. In diesem Zustand P ein wird jetzt der Elektromagnet 13b wieder stromlos geschaltet, sodass die Rastiervorrichtung 13 den ersten Kolben 11 in seiner dem Elektromagneten 13a zugewandten Endlage mechanisch festsetzt.

Ein Ausfall der Ansteuerung des Aktuators 10 im Zustand P_aus, bei dem die Parksperre ausgelegt ist, stellt kein Problem dar, da die Parksperre ihre Schaltstellung infolge der noch immer gegebenen mechanischen Verrastung des ersten Kolbens 11 selbsttätig nicht verändern kann, das Automatgetriebe also unverändert in der dem Fahrer bekannten Schaltstellung P aus verbleibt und das Kraftfahrzeug mit dem Automatgetriebe unverändert bewegt werden kann.

Bei einem Ausfall der Ansteuerung des Aktuators 10 im Zustand P_ein, bei dem die Parksperre eingelegt ist, steht dem Fahrer des Kraftfahrzeugs, in dem das Automatgetrieb mit der erfindungsgemäßen Parksperre eingebaut ist, die Notentriegelungsvorrichtung 15 zur Verfügung, um die Parksperre auch ohne den Aktuator 10 auslegen zu können. Im Ausgangszustand P_ein befinden sich die beteiligten Bauteile in ihrer jeweiligen Stellung wie in Figur 2 gezeigt. Ein Betätigen der Notentriegelungsvorrichtung 15 initiiert ein Verschwenken der verdrehfest miteinander verbundenen Hebel 16 und 17 der Notentriegelungsvorrichtung 15. Bei diesem Verschwenken drückt der Schenkel 17a des Innenhebels 17 auf den Schenkel 4b des Schalthebels, mit der Folge, dass sich der Schalthebel 4 um seine Drehachse (3a) in seiner zum Auslegen der Parksperre vorgesehenen Drehrichtung dreht und dabei wie im Normalbetrieb den Sperrkegel 6 über die Verbindungsstange 5 aus seiner Sperrstellung zieht und hierdurch die Parksperre auslegt. Das der Schalthebel 4 über seine Mitnahme 4a und den Stift 12b auch mechanisch mit der Kolbenstange 12a des zweiten Kolbens 12 des Aktuators 10 verbunden ist, bewirkt das Betätigen der Notentriegelungsvorrichtung 15 auch ein axiales Verschieben des zweiten Kolbens 12 bis zu dessen zweiter Endlage. Der erste Kolben 11 des Aktuators 10 hingegen verharrt mechanisch gegen axiale Bewegung blockiert in seiner ersten Endlage. Die Parksperre befindet sich nun im Zustand P_aus_not, in dem die Parksperre via Betätigung der Notentriegelungsvorrichtung 15 "notentriegelt" ist; alle beteiligten Bauteile befinden sich in der in Figur 4 dargestellten Position.

Wird jetzt die Betätigung Notentriegelungsvorrichtung 15 beendet, schwenken die beiden verdrehfest miteinander verbundenen Hebel 16 und 17 der Notentriegelungsvorrichtung 15 infolge der Rückstellkraft einer hier beispielhaft vorgesehenen Schenkelfeder 19 zurück in ihre Ausgangslage, mit der Folge, dann nun die Federkraft der Einlegefeder 9 das Einlegen der Parksperre initiiert.

Ein "reguläres" Verschwenken des Schalthebels 4 im Normalbetrieb des Getriebes - also mit voll funktionsfähigem Aktuator 10 - hat keinerlei mechanische Wirkung auf Innenhebel 17 und Außenhebel 16 der Notentriegelungsvorrichtung 15.

Nachfolgend und bezugnehmend auf **Figur 5** wird ein beispielhaftes Lagerungskonzept der Notentriegelungsvorrichtung 15 näher beschrieben, die in dem ersten Ausführungsbeispiel einer erfindungsgemäßen Parksperre vorgesehen ist. Figur 5 zeigt einen schematischen Teilschnitt in dem Bereich des Getriebegehäuses 20, in dem Außenhebel 16 und Innenhebel 17 der Notentriegelungsvorrichtung 15 gemäß der Figuren 1 bis 4 angeordnet sind. Leicht ersichtlich ist, dass Außenhebel 16 und Innenhebel 17 über einen Bolzen 18 verdrehfest miteinander verbunden sind, der die Gehäusewand des Getriebegehäuses 20 durchdringt, wobei sich der Getriebegehäuse-Innenraum, in dem Parksperrenrad 1, Sperrklinke 2, Schalthebel 4, Aktuator 10 und Innenhebel 17 angeordnet sind, in Figur 5 rechts der Gehäusewand befindet. Entsprechend befindet sich Außenraum mit dem Außenhebel 16 in Figur 5 links der Gehäusewand. Die entsprechende Gehäusebohrung ist mit 20a bezeichnet. Abgedichtet ist diese Durchtrittstelle des Getriebegehäuses 20 durch einen Dichtring 21, der den Bolzen 18 konzentrisch umschließt.

Zur axialen Sicherung des Bolzens 18 in der Gehäusebohrung 20a ist beispielhaft ein Sicherungsring 18a vorgesehen, der sowohl in eine korrespondierende Außennut des Bolzens 18 als auch in eine korrespondierende Innennut der Gehäusebohrung 20a eingreift und hierzu beispielsweise in Art eines Schnapprings ausgebildet ist. Für die Befestigung des Außenhebels 16 am Bolzen 18 ist beispielhaft eine kraftschlüssige Verbindung vorgesehen, hier beispielhaft eine Pressverbindung. Für die Befestigung des Innenhebels 17 am Bolzen 18 ist beispielhaft eine formschlüssige Verbindung an einer Abflachung 18b des Bolzens 18 vorgesehen, die über eine Schraube 18c unter Verwendung einer Unterlagscheibe 18d axial gesichert ist. Zur Justierung von Innenhebel 17 und Außenhebel 16 in einer definierten Ausgangsposition, in der die Notentriegelung 15 keinen Einfluss auf die Stellung des Schalthebels 4 hat, ist die Schenkelfeder 19 der Notentriegelungsvorrichtung 15 in hierfür geeigneter Weise zwischen Innenhebel 17 und Getriebegehäuse 20 eingespannt, sodass die Schenkelfeder 19 - wie bereits erwähnt - auch im Anschluss nach einer Betätigung der Notentriegelungsvorrichtung 15 die Rückstellung von Innenhebel 17 und Außenhebel 16 in diese Ausgangsposition übernimmt.

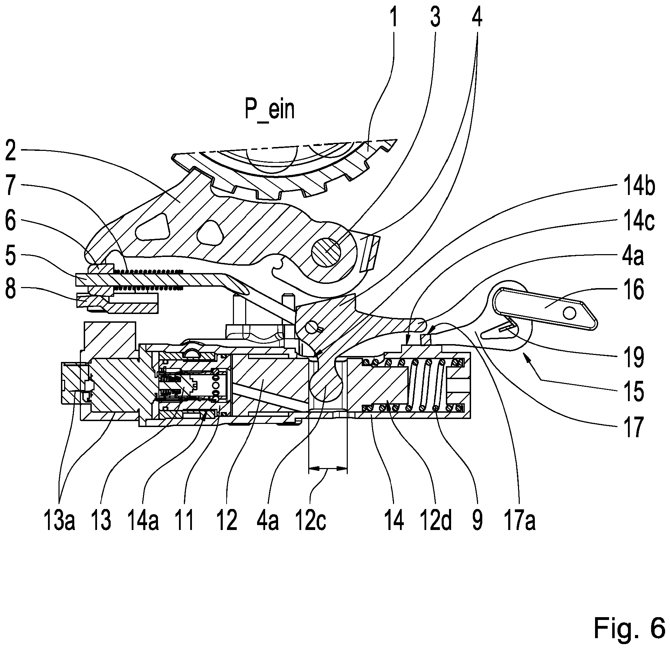

Nachfolgend und bezugnehmend auf **Figur 6** wird ein zweites Ausgestaltungsbeispiel einer erfindungsgemäßen Parksperre näher beschrieben. Die schematische Schnittdarstellung der Figur 6 zeigt die Parksperr wiederum in Schaltstellung P_ein, in der die Sperrklinke 2 das Parksperrenrad 1gegen Rotation blockiert. Bei einem Vergleich der Figur 6 mit Figur 2 ist leicht ersichtlich, dass sich die in Figur 6 gezeigte Parksperre von der in Figur 2 gezeigten Parksperre lediglich in der konstruktiven Ausgestaltung des zweiten Kolbens 12 des Aktuators 10 unterscheidet. Daher kann zur Vermeidung von Wiederholungen die nachfolgende Beschreibung der Figur 6 auf diesen Unterschied beschränkt werden.

In dem in Figur 6 gezeigten zweiten Ausgestaltungsbeispiels einer erfindungsgemäßen Parksperre weist der zweite Kolben 12 des Aktuators 10 eine Ausnehmung 12c auf, in die die Mitnahme 4a des Schalthebels 4 eingreift. Um diesen Eingriff zu ermöglichen, weist das Steuergehäuse 14 eine hinreichend große Ausnehmung 14b auf, die von der Mitnahme 4a in radialer Richtung gesehen durchgriffen wird. Die Geometrie der auf den zweiten Kolben 12 wirkenden Außenkontur der Mitnahme 4a definiert den Geschwindigkeitsverlauf der Drehbewegung des Schalthebels um seine Drehachse (3a) bei einer Axialbewegung des zweiten Kolbens 12, deren Bewegungsverlauf durch den Druckabbau im Druckraum 14a vordefiniert ist. An seinem dem ersten Kolben 11 abgewandten Ende weist der zweite Kolben 12 einen Zentrierabsatz 12d auf, der zur Zentrierung der Einlegefeder 9 dient und daher von der Einlegefeder 9 konzentrisch umschlossen wird.

Als weiteres Konstruktionsdetail ist in Figur 6 vorgesehen, dass außen am Aktuatorgehäuse 14 eine Anschlagfläche 14c angeordnet ist, an der sich der Schenkel 17a des Innenhebels 17 der Notentriegelungsvorrichtung 15 abstützen kann, wenn die Notentriegelungsvorrichtung 15 nicht betätigt ist. Die ermöglicht eine konstruktiv vereinfachte des Steuergehäuses.

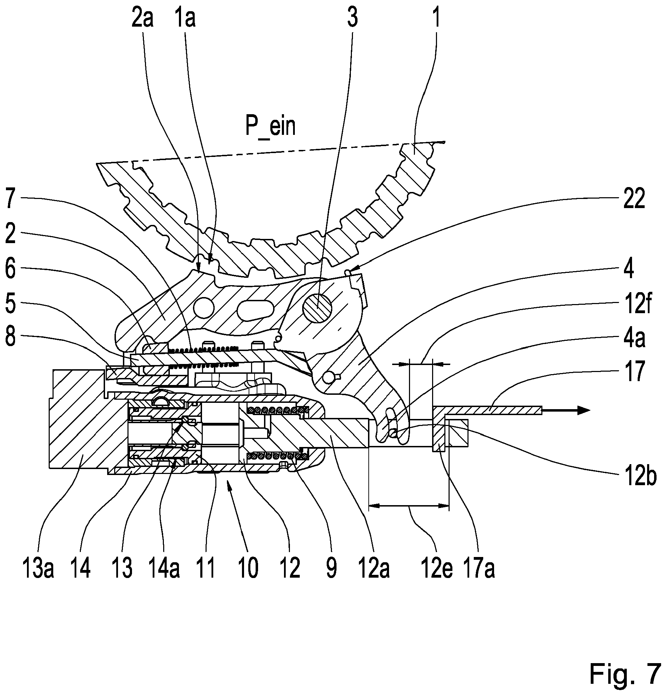

Nachfolgend und bezugnehmend auf **Figur 7** wird ein drittes Ausgestaltungsbeispiel einer erfindungsgemäßen Parksperre näher beschrieben. Die schematische Schnittdarstellung der Figur 7 zeigt die Parksperr in Schaltstellung P_ein, in der die Sperrklinke 2 das Parksperrenrad 1gegen Rotation blockiert. Bei einem Vergleich der Figur 7 mit Figur 2 ist leicht ersichtlich, dass sich die in Figur 7 gezeigte Parksperre von der in Figur 2 gezeigten Parksperre lediglich darin unterscheidet, wie der Schalthebel 4 von dem Innenhebel 17 der Notentriegelungsvorrichtung 15 zum Notauslegen der Parksperre betätigbar ist. Daher kann zur Vermeidung von Wiederholungen die nachfolgende Beschreibung der Figur 7 auf diesen Unterschied beschränkt werden.

In dem in Figur 7 gezeigten dritten Ausgestaltungsbeispiels einer erfindungsgemäßen Parksperre ist der Schenkel 17a des Innenhebels 17 der Notentriegelungsvorrichtung 15 über die Kolbenstange 12a des zweiten Kolbens 12 des zur Betätigung des Schalthebels 10 vorgesehenen Aktuators 10 mit dem Schalthebel 4 in Wirkverbindung bringbar. Hierzu weist die Kolbenstange 12a einen speziellen Eingriffsabschnitt 12e auf, an dem auf seiner dem ersten Kolben 11 zugewandten Seite der Stift 12b eingesetzt ist, über den die Axialbewegung des zweiten Kolbens 12 auf den Mitnehmer 4a des Schalthebels 4 übertragen wird. Die dem ersten Kolben 11 abgewandten Seite des Eingriffsabschnitts 12e ist derart ausgebildet, dass der Schenkel 17a des Innenhebels 17 in den Eingriffsabschnitts 12e eintaucht und beim Betätigen der Notentriegelungsvorrichtung 15 eine gegen die Federkraft der Einlegefeder gerichtete Zugkraft F auf die Kolbenstange 12a ausübt. In Figur 7 befindet sich der Innenhebel 17 in seiner Ausgangslage, in der die Notentriegelungsvorrichtung 15 nicht betätigt ist. Damit die Notentriegelungsvorrichtung 15 im Normalbetrieb keinen Einfluss auf die Axialbewegung des zweiten Kolbens 12 hat, ist axial zwischen der Mitnahme 4a des Schalthebels 4 und dem Schenkel 17a des Innenhebels 17 ein definierter Freigang 12f vorgesehen.

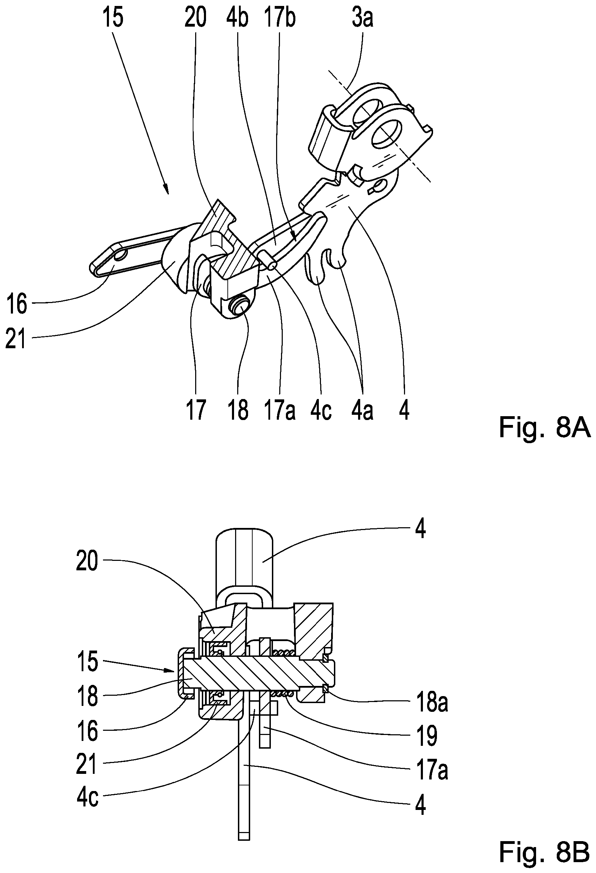

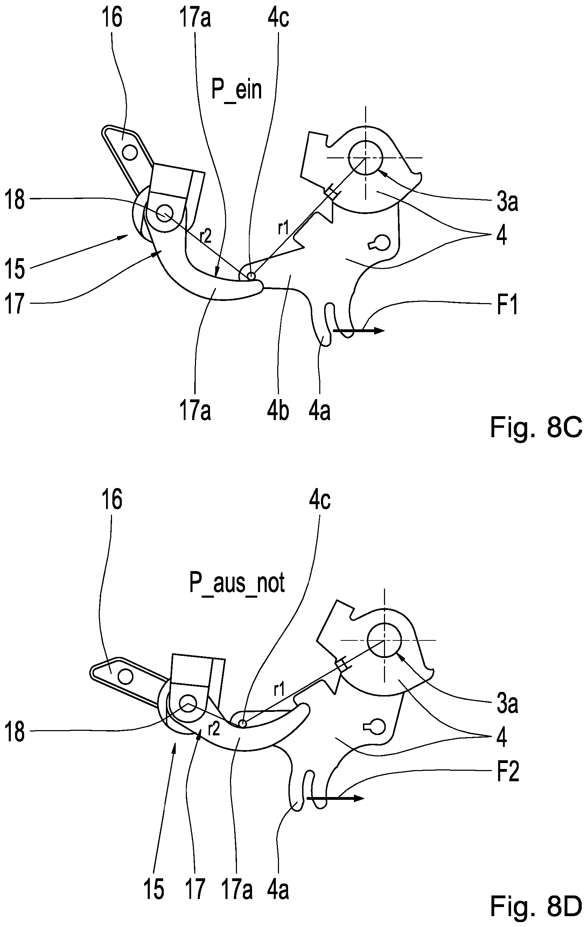

Nachfolgend und bezugnehmend auf die **Figuren 8A bis 8D** wird ein alternatives Ausführungsbeispiel einer Notentriegelungsvorrichtung für eine erfindungsgemäße Parksperre näher beschrieben. **Figur 8A** zeigt diese alternative Notentriegelungsvorrichtung in perspektivischer Darstellung, **Figur 8B** in Schnittdarstellung. **Figur 8C** zeigt eine Seitenansicht dieser alternativen Notentriegelungsvorrichtung in Schaltstellung "Parksperre eingelegt" zu Beginn der manuell initiierten Paktsperren-Notauslegens. **Figur 8D** schließlich zeigt eine Seitenansicht dieser alternativen Notentriegelungsvorrichtung in Schaltstellung "Parksperre notausgelegt", also dann, wenn die Parksperre durch manuelle Betätigung der Notentriegelung ausgelegt worden ist.

Wie aus den **Figuren 8A und 8B** leicht ersichtlich, ist seitlich an dem mit der Notentriegelungsvorrichtung 15 zusammenwirkenden Schenkel 4b des Schalthebels 4 ein Stift 4c angeordnet, der fest mit dem Schenkel 4b verbunden ist und sich achsparallel zur Schalthebel-Drehachse 3a erstreckt. Der Innenhebel 17 der Notentriegelungsvorrichtung 15 weist an der Oberseite seines Schenkel 17a eine bogenförmige Kontur 17b auf, die beim Betätigen der Notentriegelungsvorrichtung 17 kraftschlüssig auf den Stift 4c wirkt, derart, dass während der manuell initiierten Verdrehung des Schalthebels 4 um die Schalthebel-Drehachse 3a der Stift 4c entlang dieser Kontur 17b gleitet, was in den **Figuren 8C und 8D** anschaulich dargestellt ist. Die Kraftverhältnisse beim Notauslegen der Parksperre ergeben sich hierbei aus dem Hebelarmverhältnis r1/r2, bei dem der Hebelarm r1 als Achsabstand zwischen Schalthebel-Drehachse 3a und Längsachse des Stifts 4c definiert ist und der Hebelarm r2 als Achsabstand zwischen Schalthebel-Drehachse 3a und Längsachse des Bolzens 18 der Notentriegelungsvorrichtung 15 definiert ist. Logischerweise ist der Hebelarm r1 konstant, wohingegen sich der Hebelarm r2 beim Betätigen der Notentriegelungsvorrichtung 15 ausgehend von der Schaltstellung P ein im zeitlichen Verlauf der Schalthebeldrehbewegung bis zum Erreichen der Schaltstellung P_aus_not verringert.

Der vorteilhafte Effekt dieser konstruktiven Ausbildung besteht darin, dass sich bei konstanter Betätigungskraft des Innenhebels 17 die tatsächlich auf die Verbindungsstange 5 übertragene Kraft im Laufe des Parksperren-Notauslegevorgangs erhöht und somit die im Laufe jedes Parksperren-Auslegevorgangs auftretende Erhöhung der Gegenkraft kompensiert, die sich durch das Zusammendrücken der in Parksperreneinlegerichtung auf die Verbindungsstange 5 wirkende Einlegefeder 9 während des Parksperren-Auslegevorgangs zwangsläufig ergibt. In den Figuren 8C und 8D ist dies verdeutlicht durch die auf den zweiten Kolben (12) des Parksperrenaktuators (10) übertragenen Betätigungskräfte F1 (zu Beginn der Parksperren-Notauslegens) und F2 (am Ende des Parksperren-Notauslegens).

### Bezugszeichen

- 1: Parksperrenrad
- 1a: Zahnlücke der Sperrverzahnung des Parksperrenrades
- 2: Sperrklinke
- 2a: Klinkenzahn der Sperrklinke
- 3: Klinkenbolzen
- 3a: Klinkenbolzen-Längsachse; Sperrklinken-Schwenkachse; Schalthebel-Drehachse
- 4: Schalthebel
- 4a: Mitnehmer des Schalthebels
- 4b: Schenkel des Schalthebels
- 4c: Stift
- 5: Verbindungsstange
- 6: Sperrelement; Sperrkegel
- 7: Federelement
- 8: Führungsplatte
- 9: Einlegefeder, Druckfeder
- 10: Aktuator
- 11: erster Kolben des Aktuators
- 12: zweiter Kolben des Aktuators
- 12a: Kolbenstange des zweiten Kolbens
- 12b: Stift
- 12c: Ausnehmung im zweiten Kolben
- 12d: Zentrierabschnitt des zweiten Kolbens
- 12e: Eingriffsabschnitt der Kolbenstange des zweiten Kolbens
- 12f: Freigang der Kolbenstange des zweiten Kolbens
- 13: Rastiervorrichtung
- 13a: Elektromagnet der Rastvorrichtung
- 14: Steuergehäuse des Aktuators
- 14a: Druckraum im Steuergehäuse
- 14b: Ausnehmung im Steuergehäuse
- 14c: Anschlagfläche des Steuergehäuses
- 15: Notentriegelungsvorrichtung
- 16: Außenhebel der Notentriegelungsvorrichtung
- 17: Innenhebel der Notentriegelungsvorrichtung
- 17a: Schenkel des Innenhebels
- 17b: bogenförmige Kontur des Innenhebels
- 18: Bolzen der Notentriegelungsvorrichtung
- 18a: Sicherungsring des Bolzens
- 18b: Abflachung des Bolzens
- 18c: Schraube des Bolzens
- 18d: Unterlagscheibe
- 19: Schenkelfeder der Notentriegelungsvorrichtung
- 20: Getriebegehäuse
- 20a: Gehäusebohrung
- 21: Dichtring
- 22: Niederhaltefeder
- 22a: freies Ende der Niederhaltefeder
- 22b: Schenkel der Niederhaltefeder
- 22c: mittlerer Abschnitt der Niederhaltefeder

- P_aus: ausgelegter Zustand der Parksperre
- P_aus_not: ausgelegter Zustand der Parksperre nach Betätigung der Notentriegelungsvorrichtung
- P ein: eingelegter Zustand der Parksperre
- F: Zugkraft beim Notauslegen der Parksperre
- F1: Betätigungskraft zu Beginn des Notauslegens der Parksperre
- F2: Betätigungskraft am Ende des Notauslegens der Parksperre

## Patentansprüche

1. Parksperre für ein Automatgetriebe in einem Kraftfahrzeug, umfassend
• ein Parksperrenrad (1), das eine Sperrverzahnung mit Zahnlücken (1a) aufweist und verdrehfest mit einer Getriebewelle verbunden ist,
• eine Sperrklinke (2), die auf einem Klinkenbolzen (3) verschwenkbar gelagert ist und einen Klinkenzahn (2a) aufweist, der im eingelegten Zustand (P_ein) der Parksperre in eine Zahnlücke (1a) der Sperrverzahnung des Parksperrenrades (1) eingreift und hierdurch Parksperrenrad (1) und Getriebewelle gegen Rotation blockiert,
• einen Schalthebel (4), der zur Vorgabe der Schaltstellung (P_ein, P_aus) der Parksperre um eine Schalthebel-Drehachse (3a) verdrehbar ist,
• eine Verbindungsstange (5) mit einem gegen Parksperrenauslegerichtung angefederten Sperrelement (6), welches beim Einlegen der Parksperre das Eingreifen des Klinkenzahns (2a) der Sperrklinke (2) in eine Zahnlücke (1a) der Sperrverzahnung des Parksperrenrades (1) bewirkt und im eingelegten Zustand (P_ein) der Parksperre ein Herausdrücken des Klinkenzahns (2a) der Sperrklinke (2) aus der Zahnlücke (1a) der Sperrverzahnung des Parksperrenrades (1) verhindert, wobei das dem Sperrelement (6) abgewandte Ende der Verbindungsstange (5) gelenkig mit dem Schalthebel (4) verbunden ist,
• eine Einlegefeder (9), deren Federkraft in Parksperreneinlegerichtung auf den Schalthebel (4) wirkt, sowie
• einen hydraulisch betätigbaren Aktuator (10), dessen Druckkraft in Parksperrenauslegerichtung auf den Schalthebel (4) wirkt,
**dadurch gekennzeichnet,**
**dass** eine Notentriegelungsvorrichtung (15) vorgesehen ist, die mechanisch derart mit dem Schalthebel (4) in Wirkverbindung bringbar ist, dass die Parksperre manuell auslegbar ist,
und **dass** der Aktuator (10) zwei auf gleicher Längsachse axial in einem Aktuatorgehäuse (14) verschiebbar angeordnete Kolben (11, 12) und eine in dem Aktuatorgehäuse (14) angeordnete, von einem Elektromagneten (13a) aktuierbare Rastiervorrichtung (13) aufweist, wobei
• der erste Kolben (11) zum Auslegen der Parksperre hydraulisch mit Druck beaufschlagbar ist und bei Druckbeaufschlagung den zweiten Kolben (12) gegen die Federkraft der Einlegefeder (9) axial verschiebt,
• der zweite Kolben (12) mechanisch derart mit dem Schalthebel (4) verbunden ist, dass eine Axialbewegung des zweiten Kolbens (12) eine Verdrehung des Schalthebels (4) um eine Schalthebel-Drehachse (3a) bewirkt und umgekehrt,
• die Rastiervorrichtung (13) den ersten Kolben (11) entweder in einer dem eingelegten Zustand (P_ein) der Parksperre zugeordneten Kolbenstellung oder in einer dem ausgelegten Zustand (P_aus) der Parksperre zugeordneten Kolbenstellung mechanisch festsetzt, wenn der auf die Rastiervorrichung (13) wirkende Elektromagnet (13a) elektrisch nicht bestromt ist, und
• der Elektromagnet (13a) zum Lösen der Rastierung in der jeweiligen Kolbenstellung elektrisch bestromt werden muss, sodass im Falle einer Betätigung der Notentriegelungsvorrichtung (15) der zweite Kolben (12) von dem Schalthebel (4) axial verschoben wird, ohne dass der erste Kolben (11) seine rastierte, dem eingelegten Zustand (P_ein) der Parksperre entsprechende Kolbenstellung verlässt.

2. Parksperre nach Anspruch 1, **dadurch gekennzeichnet, dass** der erste und zweite Kolben (11, 12) in Richtung der Längsachse gesehen hintereinander angeordnet sind.

3. Parksperre nach Anspruch 1 oder 2, **dadurch gekennzeichnet, dass** die Einlegefeder (9) als Druckfeder ausgeführt ist, die axial zwischen dem zweiten Kolben (12) und dem Aktuatorgehäuse (14) eingespannt ist und dabei axial betrachtet eine Kolbenstange (12a) des zweiten Kolbens (12) ganz oder teilweise konzentrisch umschließt.

4. Parksperre nach Anspruch 1, 2 oder 3, **dadurch gekennzeichnet, dass** die Parksperre eine getriebegehäusefeste Führungsvorrichtung umfasst, die als Führungsplatte (8) oder als Führungshülse ausgebildet ist, gegen die sich die Sperrvorrichtung (6) gegen eine Normalkraft der Sperrklinke (2) beim Einlegen und Auslegen der Parksperre abstützt.

5. Parksperre nach Anspruch 4, **dadurch gekennzeichnet, dass** die Führungsvorrichtung am Aktuatorgehäuse (14) befestigt ist.

6. Parksperre nach Anspruch 4, **dadurch gekennzeichnet, dass** die Führungsvorrichtung ein integraler Bestandteil des Aktuatorgehäuses ist.

7. Parksperre nach einem der Ansprüche 1 bis 6, **dadurch gekennzeichnet, dass** bei Betätigung der Notentriegelungsvorrichtung (15) ein innerhalb eines Getriebegehäuses (20) des Automatgetriebes angeordneter Innenhebel (17) der Notentriegelungsvorrichtung (15) mechanisch direkt auf den Schalthebel (4) wirkt.

8. Parksperre nach einem der Ansprüche 1 bis 6, **dadurch gekennzeichnet, dass** bei Betätigung der Notentriegelungsvorrichtung (15) ein innerhalb eines Getriebegehäuses (20) des Automatgetriebes angeordneter Innenhebel (17) der Notentriegelungsvorrichtung (15) mechanisch direkt auf die Kolbenstange (12a) des zweiten Kolbens (12) wirkt, sodass der Innenhebel (17) über die Kolbenstange (12a) auf den Schalthebel (4) wirkt.

9. Parksperre nach einem der vorigen Ansprüche, **dadurch gekennzeichnet, dass** der Schalthebel (4) auf dem Klinkenbolzen (3) verdrehbar gelagert ist, sodass Klinkenbolzen-Längsachse (3a), Sperrklinken-Schwenkachse und Schalthebel-Drehachse identisch sind.

10. Parksperre nach einem der vorigen Ansprüche, **dadurch gekennzeichnet, dass** die am Schalthebel (4) gelenkig befestigte Verbindungsstange (5) derart unterhalb der Sperrklinke (2) angeordnet ist, dass die Bewegungsebene der Verbindungsstange (5) im Wesentlichen parallel zur Bewegungsebene von Sperrklinke (2), Schalthebel (4) und Kolbenstange (12a) angeordnet ist.

11. Parksperre nach einem der vorigen Ansprüche, **dadurch gekennzeichnet, dass** der Schalthebel (4) zwei Schenkel aufweist, die jeweils eine kreisrunde Bohrung aufweisen, wobei diese Bohrungen koaxial zueinander angeordnet sind und der Lagerung des Schalthebels (4) auf dem Klinkenbolzen (3) dienen, wobei die Sperrklinke (2) zwischen den beiden Schenkeln gelagert ist.

12. Parksperre nach einem der vorigen Ansprüche, **dadurch gekennzeichnet, dass** an dem Schalthebel (4) eine Niederhaltefeder (22) befestigt oder eingehängt ist, welche im ausgelegten Zustand (P_aus) der Parksperre ein Berühren der Sperrklinke (2) an dem Parksperrenrad (1) verhindert.

13. Parksperre nach Anspruch 12, **dadurch gekennzeichnet, dass** ein kraftübertragender Abschnitt (22a, 22c) der Niederhaltefeder (22) nur dann mit der Sperrklinke (2) kraftschlüssig in Kontakt kommt, wenn der Schalthebel (4) ausgehend von seiner Stellung im eingelegten Zustand (P_ein) der Parksperre um einen vordefinierten Winkel in Richtung seiner Stellung im ausgelegten Zustand (P_aus) der Parksperre verdreht wird, sodass erst dann, wenn dieser kraftübertragende Abschnitt (22a, 22c) der Niederhaltefeder (22) kraftschlüssig auf die Sperrklinke (2) wirkt, die auf die Sperrklinke (2) wirkende Kraft der Niederhaltefeder (22) einen Kontakt zwischen Sperrklinke (2) und Parksperrenrad (1) verhindert.

14. Parksperre nach Anspruch 12, **dadurch gekennzeichnet, dass** die Niederhaltefeder (22) an dem Schalthebel (4) derart vorgespannt ist, dass ein kraftübertragender Abschnitt (22a, 22c) der Niederhaltefeder bereits mit der Sperrklinke (2) kraftschlüssig in Kontakt ist, wenn sich der Schalthebel (4) in seiner Stellung im eingelegten Zustand (P_ein) der Parksperre befindet, wobei dann, wenn der Schalthebel (4) ausgehend von seiner Stellung im eingelegten Zustand (P_ein) der Parksperre in Richtung seiner Stellung im ausgelegten Zustand (P_aus) der Parksperre verdreht wird, sich die auf die Sperrklinke (2) wirkende Kraft der Niederhaltefeder (22) derart erhöht, dass ein Kontakt zwischen Sperrklinke (2) und Parksperrenrad (1) sicher verhindert wird.

## Claims

1. Parking lock for an automatic transmission in a motor vehicle, comprising
• a parking lock wheel (1), which has a locking toothing with tooth spaces (1a) and which is connected to a transmission shaft for rotation therewith,
• a pawl (2), which is mounted pivotably on a pawl journal (3) and has a pawl tooth (2a) which, in the engaged state (P_ein) of the parking lock, engages in a tooth space (1a) of the locking toothing of the parking lock wheel (1) and thereby blocks the parking lock wheel (1) and the transmission shaft against rotation,
• a shift lever (4), which, for specifying the shifting position (P_ein, P_aus) of the parking lock, is rotatable about a shift lever axis of rotation (3a),
• a connecting rod (5) having a locking element (6) which is spring-loaded counter to the parking lock disengagement direction and which, when the parking lock is engaged, causes the pawl tooth (2a) of the pawl (2) to engage in a tooth space (1a) of the locking toothing of the parking lock wheel (1) and, in the engaged state (P_ein) of the parking lock, prevents the pawl tooth (2a) of the pawl (2) from being pushed out of the tooth space (1a) of the locking toothing of the parking lock wheel (1), wherein that end of the connecting rod (5) which faces away from the locking element (6) is connected in an articulated manner to the shift lever (4),
• an engagement spring (9), the spring force of which acts on the shift lever (4) in the parking lock engagement direction, and
• a hydraulically actuatable actuator (10), the compression force of which acts on the shift lever (4) in the parking lock disengagement direction,
**characterized**
**in that** an emergency release device (15) is provided which can be brought mechanically into operative connection with the shift lever (4) in such a manner that the parking lock can be disengaged manually,
and **in that** the actuator (10) has two pistons (11, 12), which are arranged displaceably axially on the same longitudinal axis in an actuator housing (4), and a detent device (13), which is arranged in the actuator housing (4) and is actuatable by a solenoid (13a), wherein,
• for the disengagement of the parking lock, the first piston (11) can be acted upon with pressure hydraulically and, when pressurized, displaces the second piston (12) axially counter to the spring force of the engagement spring (9),
• the second piston (12) is mechanically connected to the shift lever (4) in such a manner that an axial movement of the second piston (12) brings about a rotation of the shift lever (4) about a shift lever axis of rotation (3a), and vice versa,
• the detent device (13) mechanically fixes the first piston (11) either in a piston position assigned to the engaged state (P_ein) of the parking lock or in a piston position assigned to the disengaged state (P_aus) of the parking lock, when the solenoid (13a) acting on the detent device (13) is not energized electrically, and,
• in order to release the detent in the respective piston position, the solenoid (13a) has to be energized electrically,
such that, in the event of an actuation of the emergency release device (15), the second piston (12) is displaced axially by the shift lever (4) without the first piston (11) leaving its arrested piston position corresponding to the engaged state (P_ein) of the parking lock.

2. Parking lock according to Claim 1, **characterized in that** the first and second piston (11, 12) are arranged consecutively as seen in the direction of the longitudinal axis.

3. Parking lock according to Claim 1 or 2, **characterized in that** the engagement spring (9) is designed as a compression spring which is clamped axially between the second piston (12) and the actuator housing (14) and, as considered axially, entirely or partially concentrically surrounds a piston rod (12a) of the second piston (12).

4. Parking lock according to Claim 1, 2 or 3, **characterized in that** the parking lock comprises a guide device which is fixed on the transmission housing and which is embodied as a guide plate (8) or as a guide sleeve, against which the locking device (6) is supported counter to a normal force of the pawl (2) when the parking lock is engaged and disengaged.

5. Parking lock according to Claim 4, **characterized in that** the guide device is fastened to the actuator housing (14) .

6. Parking lock according to Claim 4, **characterized in that** the guide device is an integral part of the actuator housing.

7. Parking lock according to one of Claims 1 to 6, **characterized in that**, when the emergency release device (15) is actuated, an internal lever (17) of the emergency release device (15), which internal lever is arranged inside a transmission housing (20) of the automatic transmission, acts mechanically directly on the shift lever (4).

8. Parking lock according to one of Claims 1 to 6, **characterized in that**, when the emergency release device (15) is actuated, an internal lever (17) of the emergency release device (15), which internal lever is arranged inside a transmission housing (20) of the automatic transmission, acts mechanically directly on the piston rod (12a) of the second piston (12), such that the internal lever (17) acts on the shift lever (4) via the piston rod (12a).

9. Parking lock according to one of the preceding claims, **characterized in that** the shift lever (4) is mounted rotatably on the pawl journal (3), and therefore the pawl journal longitudinal axis (3a), the pawl pivot axis and the shift lever axis of rotation are identical.

10. Parking lock according to one of the preceding claims, **characterized in that** the connecting rod (5) which is fastened in an articulated manner to the shift lever (4) is arranged below the pawl (2) in such a manner that the plane of movement of the connecting rod (5) is arranged substantially parallel to the plane of movement of the pawl (2), the shift lever (4) and the piston rod (12a) .

11. Parking lock according to one of the preceding claims, **characterized in that** the shift lever (4) has two limbs which each have a circular bore, wherein said bores are arranged coaxially with respect to one another and are used for mounting the shift lever (4) on the pawl journal (3), wherein the pawl (2) is mounted between the two limbs.

12. Parking lock according to one of the preceding claims, **characterized in that** a hold-down spring (22) is fastened to or hooked in on the shift lever (4), said hold-down spring, in the disengaged state (P_aus) of the parking lock, preventing the pawl (2) from making contact with the parking lock wheel (1).

13. Parking lock according to Claim 12, **characterized in that** a force-transmitting portion (22a, 22c) of the hold-down spring (22) comes into contact in a force-fitting manner with the pawl (2) only when the shift lever (4) is rotated from its position in the engaged state (P_ein) of the parking lock about a predefined angle in the direction of its position in the disengaged state (P_aus) of the parking lock, such that only whenever said force-transmitting portion (22a, 22c) of the hold-down spring (22) acts in a force-fitting manner on the pawl (2) does the force of the hold-down spring (22) that acts on the pawl (2) prevent contact between the pawl (2) and the parking lock wheel (1).

14. Parking lock according to Claim 12, **characterized in that** the hold-down spring (22) is pretensioned on the shift lever (4) in such a manner that a force-transmitting portion (22a, 22c) of the hold-down spring is already in contact in a force-fitting manner with the pawl (2) when the shift lever (4) is in its position in the engaged state (P_ein) of the parking lock, wherein, whenever the shift lever (4) is rotated from its position in the engaged state (P_ein) of the parking lock in the direction of its position in the disengaged state (P_aus) of the parking lock, the force of the hold-down spring (22) that acts on the pawl (2) is increased in such a manner that contact between the pawl (2) and the parking lock wheel (1) is reliably prevented.

## Revendications

1. Blocage de stationnement pour une transmission automatique dans un véhicule automobile, comprenant :
- une roue de blocage de stationnement (1), qui présente une denture de blocage avec des entredents (1a) et qui est reliée de manière immobile en rotation à un arbre de transmission,
- un cliquet de blocage (2), qui est monté pivotant sur un boulon de cliquet (3) et présente une dent de cliquet (2a) qui, à l'état enclenché (P_ein) du blocage de stationnement, pénètre dans un entredent (1a) de la denture de blocage de la roue de blocage de stationnement (1) et empêche ainsi une rotation de la roue de blocage de stationnement (1) et de l'arbre de transmission,
- un levier de changement de vitesse (4), qui peut être tourné autour d'un axe de rotation de levier de changement de vitesse (3a) pour définir la position de changement de vitesse (P_ein, P_aus) du blocage de stationnement,
- une tige de liaison (5) avec un élément de blocage (6) monté sur ressort à l'encontre de la direction de désenclenchement du blocage de stationnement, qui, lors de l'enclenchement du blocage de stationnement, provoque la pénétration de la dent de cliquet (2a) du cliquet de blocage (2) dans un entredent (1a) de la denture de blocage de la roue de blocage de stationnement (1) et, à l'état enclenché (P_ein) du blocage de stationnement, empêche une sortie de la dent de cliquet (2a) du cliquet de blocage (2) de l'entredent (1a) de la denture de blocage de la roue de blocage de stationnement (1), l'extrémité de la tige de liaison (5) détournée de l'élément de blocage (6) étant reliée de manière articulée au levier de changement de vitesse (4),
- un ressort d'enclenchement (9), dont la force de ressort agit sur le levier de changement de vitesse (4) dans la direction de désenclenchement du blocage de stationnement, ainsi que
- un actionneur (10) à commande hydraulique, dont la force de pression agit sur le levier de changement de vitesse (4) dans la direction de désenclenchement du blocage de stationnement,
**caractérisé en ce que**
un dispositif de déverrouillage d'urgence (15) est prévu, qui peut être mis en liaison active mécanique avec le levier de changement de vitesse (4) de telle sorte que le blocage de stationnement peut être désenclenché manuellement,
et **en ce que** l'actionneur (10) présente deux pistons (11, 12) agencés de manière à pouvoir coulisser axialement sur le même axe longitudinal dans un boîtier d'actionneur (14) et un dispositif d'encliquetage (13) agencé dans le boîtier d'actionneur (14), pouvant être actionné par un électroaimant (13a),
- le premier piston (11) pouvant être sollicité hydrauliquement par une pression pour le désenclenchement du blocage de stationnement et, lors de la sollicitation par une pression, amenant le deuxième piston (12) à coulisser axialement à l'encontre de la force de ressort du ressort d'enclenchement (9),
- le deuxième piston (12) étant relié mécaniquement au levier de changement de vitesse (4), de telle sorte qu'un déplacement axial du deuxième piston (12) provoque une rotation du levier de changement de vitesse (4) autour d'un axe de rotation de levier de changement de vitesse (3a) et inversement,
- le dispositif d'encliquetage (13) immobilisant mécaniquement le premier piston (11) soit dans une position de piston associée à l'état enclenché (P_ein) du blocage de stationnement, soit dans une position de piston associée à l'état désenclenché (P_aus) du blocage de stationnement, lorsque l'électroaimant (13a) agissant sur le dispositif d'encliquetage (13) n'est pas alimenté électriquement, et
- l'électroaimant (13a) devant être alimenté électriquement pour libérer l'encliquetage dans la position de piston respective,
de telle sorte qu'en cas d'actionnement du dispositif de déverrouillage d'urgence (15), le deuxième piston (12) est amené à coulisser axialement par le levier de changement de vitesse (4), sans que le premier piston (11) ne quitte sa position de piston encliquetée, correspondant à l'état enclenché (P_ein) du blocage de stationnement.

2. Blocage de stationnement selon la revendication 1, **caractérisé en ce que** le premier et le deuxième piston (11, 12) sont agencés l'un derrière l'autre tels que vus dans la direction de l'axe longitudinal.

3. Blocage de stationnement selon la revendication 1 ou 2, **caractérisé en ce que** le ressort d'enclenchement (9) est réalisé sous forme de ressort de compression, qui est serré axialement entre le deuxième piston (12) et le boîtier d'actionneur (14) et qui, tel que vu axialement, entoure totalement ou partiellement de manière concentrique une tige de piston (12a) du deuxième piston (12) .

4. Blocage de stationnement selon la revendication 1, 2 ou 3, **caractérisé en ce que** le blocage de stationnement comprend un dispositif de guidage solidaire du boîtier de transmission, qui est configuré sous forme de plaque de guidage (8) ou sous forme de douille de guidage, contre laquelle le dispositif de blocage (6) s'appuie à l'encontre d'une force normale du cliquet de blocage (2) lors de l'enclenchement et du désenclenchement du blocage de stationnement.

5. Blocage de stationnement selon la revendication 4, **caractérisé en ce que** le dispositif de guidage est fixé au boîtier d'actionneur (14).

6. Blocage de stationnement selon la revendication 4, **caractérisé en ce que** le dispositif de guidage fait partie intégrante du boîtier d'actionneur.

7. Blocage de stationnement selon l'une quelconque des revendications 1 à 6, **caractérisé en ce que**, lors de l'actionnement du dispositif de déverrouillage d'urgence (15), un levier intérieur (17) du dispositif de déverrouillage d'urgence (15), agencé à l'intérieur d'un boîtier de transmission (20) de la transmission automatique, agit mécaniquement directement sur le levier de changement de vitesse (4).

8. Blocage de stationnement selon l'une quelconque des revendications 1 à 6, **caractérisé en ce que**, lors de l'actionnement du dispositif de déverrouillage d'urgence (15), un levier intérieur (17) du dispositif de déverrouillage d'urgence (15), agencé à l'intérieur d'un boîtier de transmission (20) de la transmission automatique, agit mécaniquement directement sur la tige de piston (12a) du deuxième piston (12), de telle sorte que le levier intérieur (17) agit sur le levier de changement de vitesse (4) par l'intermédiaire de la tige de piston (12a).

9. Blocage de stationnement selon l'une quelconque des revendications précédentes, **caractérisé en ce que** le levier de changement de vitesse (4) est monté à rotation sur le boulon de cliquet (3), de telle sorte que l'axe longitudinal de boulon de cliquet (3a), l'axe de pivotement de cliquet de blocage et l'axe de rotation de levier de changement de vitesse sont identiques.

10. Blocage de stationnement selon l'une quelconque des revendications précédentes, **caractérisé en ce que** la tige de liaison (5) fixée de manière articulée au levier de changement de vitesse (4) est agencée en dessous du cliquet de blocage (2) de telle sorte que le plan de déplacement de la tige de liaison (5) est agencé essentiellement parallèlement au plan de déplacement du cliquet d'arrêt (2), du levier de changement de vitesse (4) et de la tige de piston (12a).

11. Blocage de stationnement selon l'une quelconque des revendications précédentes, **caractérisé en ce que** le levier de changement de vitesse (4) présente deux branches, qui présentent chacune un alésage circulaire, ces alésages étant agencés coaxialement l'un par rapport à l'autre et servant au montage du levier de changement de vitesse (4) sur le boulon de cliquet (3), le cliquet de blocage (2) étant monté entre les deux branches.

12. Blocage de stationnement selon l'une quelconque des revendications précédentes, **caractérisé en ce qu'**un ressort de maintien (22) est fixé ou accroché au levier de changement de vitesse (4), lequel empêche, à l'état désenclenché (P_aus) du blocage de stationnement, un contact du cliquet d'arrêt (2) avec la roue de blocage de stationnement (1).

13. Blocage de stationnement selon la revendication 12, **caractérisé en ce qu'**une section de transfert de force (22a, 22c) du ressort de maintien (22) ne vient en contact par friction avec le cliquet de blocage (2) que lorsque le levier de changement de vitesse (4) est tourné d'un angle prédéfini en direction de sa position à l'état désenclenché (P_aus) du blocage de stationnement, à partir de sa position à l'état enclenché (P_ein) du blocage de stationnement, de telle sorte ce n'est que lorsque cette section de transfert de force (22a, 22c) du ressort de maintien (22) agit par friction sur le cliquet de blocage (2) que la force du ressort de maintien (22) agissant sur le cliquet de blocage (2) empêche un contact entre le cliquet de blocage (2) et la roue de blocage de stationnement (1).

14. Blocage de stationnement selon la revendication 12, **caractérisé en ce que** le ressort de maintien (22) est précontraint sur le levier de changement de vitesse (4) de telle sorte qu'une section de transfert de force (22a, 22c) du ressort de maintien est déjà en contact par friction avec le cliquet de blocage (2) lorsque le levier de changement de vitesse (4) se trouve dans sa position à l'état enclenché (P_ein) du blocage de stationnement ; lorsque le levier de changement de vitesse (4) est tourné à partir de sa position à l'état enclenché (P_ein) du blocage de stationnement en direction de sa position à l'état désenclenché (P_aus) du blocage de stationnement, la force du ressort de maintien (22) agissant sur le cliquet de blocage (2) augmentant de telle sorte qu'un contact entre le cliquet de blocage (2) et la roue de blocage de stationnement (1) est empêché de manière sûre.
